# EUROPEAN PATENT APPLICATION

(11) **EP 1 037 481 A1**
(43) Date of publication of application: **20.09.2000**
(21) Application number: 99105277.0
(22) Date of filing: 15.03.1999
(51) Int. Cl.: H04Q 7/32, H04B 7/26, H04J 13/02, H04L 12/58

(54) **Simultaneous transmission of random access bursts**

(71) Applicant: Sony International (Europe) GmbH, 50829 Köln (DE)
(72) Inventor: Stirling-Gallacher, Richard, Sony Int. Europe GmbH, 70736 Fellbach (DE); Böhnke, Ralf, Sony Int. Europe GmbH, 70736 Fellbach (DE); Halton, John, Sony Int. Europe GmbH, 70736 Fellbach (DE); Izumi, Seiichi, Sony Int. Europe GmbH, 70736 Fellbach (DE); James, Paul, Sony Int. Europe GmbH, 70736 Fellbach (DE); Jürgensen,Jens-Uwe Sony Int. Europe GmbH, 70736 Fellbach (DE); Kornprobst, Stefan, c/o Sony Int. (Europe) GmbH, 70736 Fellbach (DE)
(74) Representative: Körber, Wolfhart, Dr.

(57) **Abstract**

The present invention relates to an apparatus for transmitting and receiving signals in a code division multiple access telecommunication system and a method for transmitting random access bursts in a code division multiple access telecommunication system. In the code division multiple access telecommunication system, a random access channel for the transmission of random access bursts is provided, whereby a random access burst comprises a preamble part and a message part. The apparatus (1) according to the present invention comprises generating means (2) for generating random access bursts, whereby the preamble part of a random access burst has a first and a second allocated code and the message part of the same random access burst has a first and a second allocated code, whereby the message part codes are determined on the basis of the preamble codes. The apparatus (1) according to the present invention further comprises transmitting means (5) for transmitting generated random access bursts. The means (5) for transmitting random access bursts are adapted to transmit at least two random access bursts simultaneously, whereby random access bursts to be transmitted simultaneously are generated by the generating means (2) so that the preamble parts thereof differ in at least one code. The first code of the preamble part of a random access burst might be a signature code and the second code of the preamble part of a random access burst might be a spreading code. The first code of a message part of a random access burst might be a spreading code and the second code of a message part of a random access burst might be a scrambling code.

The apparatus (1) and the method according to the present invention enable the transmission of a higher data rate on the random access channel without necessitating an increase of the time duration of a random access burst.

## Description

The present invention relates to an apparatus for transmitting and receiving signals in a code division multiple access (CDMA) telecommunication system and to a method for transmitting random access bursts in a CDMA telecommunication system. Particularly, the present invention relates to the transmission of random access bursts in a random access channel, whereby each random access burst comprises a preamble part and a message part.

A telecommunication system is a system, in which data are communicated between one or more base stations and one ore more mobile stations. Usually, the communication area is divided in cells, in which one base station communicates with one or more mobile stations and vice versa. Multiple access systems are used to support the simultaneous access of a plurality of mobile stations to one base station within the limited resources of the transmission system. Several multiple access systems are known, such as frequency division multiple access, time division multiple access or code division multiple access. Additionally to these basic types of multiple access systems, combinations of these different systems are possible and in practical use. In the GSM system, for example, a combination of frequency division multiple access and time division multiple access is used.

The present invention particularly relates to the transmission of random access bursts in a code division multiple access system. Random access bursts are transmitted within random access time slots from a mobile station to a base station, for example, to request a service from the base station. If, for example, a random access burst from the mobile station contains a service request, the receiving base station checks, if it has sufficient resources available, and sends a confirmation information to the mobile station to grant the requested service.

In a typical telecommunication system, the random access bursts are transmitted in predefined random access time windows, which comprise several random access time slots. The different random access time slots are thereby randomly chosen by a mobile station for the transmission of random access bursts. Each random access burst comprises a preamble part and a message part. The preamble part contains the signature code which indicates the spreading code for the message part of the random access burst. The message part comprises data, as for example service request data and an identifier for the mobile station or the like.

In a currently proposed wideband direct sequence CDMA (WCDMA) system, the random access bursts are based on a first and a second allocated code for the preamble part and a first and a second allocated code for the message part of a random access burst. The first allocated code of the preamble part of a random access burst is for example a signature code and the second allocated code of the preamble part is for example a spreading code. The spreading code used for the preamble part of a random access burst is cell-specific, which means, that each cell of the telecommunication system has one or more fixed allocated spreading codes, which differentiate the cell from neighbouring cells. In adjacent cells of the telecommunication system different spreading codes are therefore used for the preamble parts of the random access bursts.

The signature code for the preamble part of the random access burst is one of a predetermined set of different signatures (i. e. 16).

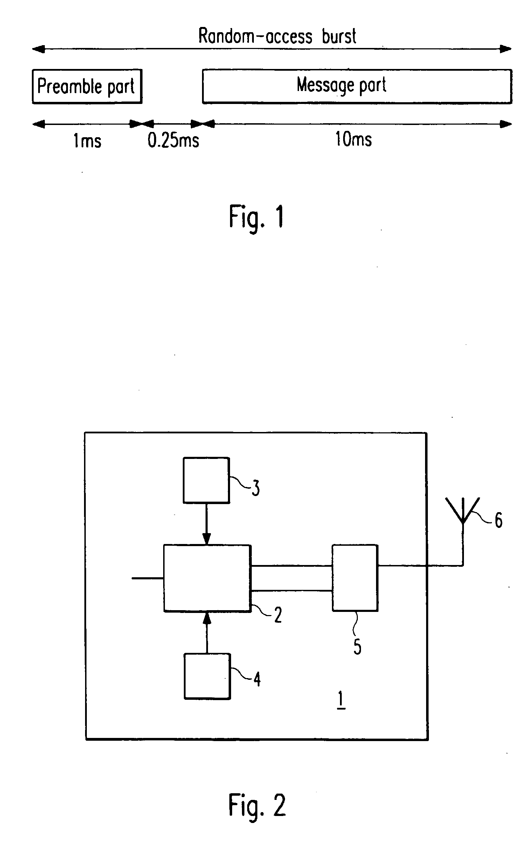

In Figure 1, the random access burst for the frequency division duplex mode of the above-mentioned WCDMA system is shown as an example. The shown random access burst comprises a preamble part and a message part. The preamble part carries a signature code randomly chosen from one of the mentioned set of different signature codes and is spread by a spreading code, for example by a direct sequence spreading code of the length 256. The preamble part is not scrambled. As mentioned above, the spreading code for the preamble part is cell specific and there may be more than one spreading code per cell.

The message part of the random access burst shown in Figure 1 carries the useful information and is spread and scrambled. The spreading code used for the message part is determined on the basis of the signature code of the preamble part. The scrambling code used for the message part of the random access burst is determined on the basis of the spreading code of the preamble part. Thus, the spreading code and the signature code of the message part determine automatically the spreading code and the scrambling code of the message part.

In the above-mentioned currently proposed WCDMA system, the length of the spreading code for the Q channel (control channel) is 256 and between 32 and 256 for the I channel (data channel) of the message part. Since the minimum spreading factor of the message part is therefore 32 and the duration of the message part is determined to be 10ms, there is a restriction on the amount of data that can be transmitted in the message part. Further, since the transmission of the random access burst and therefore the message part is not power-controlled, an extension of the message part to transmit more information is disadvantageous.

The object of the present invention is therefore to provide an apparatus for transmitting and receiving signals in a code division multiple access telecommunication system according to the preamble of claim 1 and a method for transmitting random access bursts in a code division multiple access telecommunication system according to the preamble of claim 9, which enables the transmission of more data on the random access channel within a certain period of time (higher bit rate).

This object is achieved by an apparatus for transmitting and receiving signals in a code division multiple access telecommunication system, in which a random access channel for the transmission of random access bursts is provided, whereby a random access burst comprises a preamble part and a message part, with generating means for generating random access bursts. The preamble part of a random access burst has a first and a second allocated code and the message part of the same random access burst has a first and a second allocated code, whereby the message part codes are determined on the basis of the preamble codes. Further comprised are transmitting means for transmitting generated random access bursts which are adapted to transmit at least two random access bursts simultaneously, whereby random access bursts to be transmitted simultaneously are generated by said generating means so that the preamble parts thereof differ in at least one code.

This object is further achieved by a method for transmitting random access bursts in a code division multiple access telecommunication system, in which a random access channel for the transmission of random access bursts is provided, whereby a random access burst comprises a preamble part and a message part, comprising the steps of generating random access bursts, whereby the preamble part of a random access burst has a first and a second allocated code and the message part of the same random access burst has a first and a second allocated code, whereby the message part codes are determined on the basis of the preamble codes, and transmitting generated random access bursts. At least two random access bursts are transmitted simultaneously, whereby the preamble parts thereof differ in at least one code.

Thus, the apparatus and the method according to the present invention enable the transmission of a higher data amount, i.e. a higher bit rate, of data within the time duration of one random access burst, without necessitating an increase of the time duration of a random access burst or the message part thereof.

Advantageously, the first code allocated to the preamble part of a random access burst is a signature code, which is comprised in said preamble part, and said second code allocated to the preamble part is a spreading code. In this case, the first code allocated to the message part of the random access burst is a spreading code determined on the basis of the signature code of the preamble part and the second code of the message part is a scrambling code determined on the basis of the spreading code of the preamble part.

Further advantageously, the generating means generates random access bursts to be transmitted simultaneously so that the preamble parts thereof differ in the signature codes. This is particularly advantageous in the case, in which the telecommunication system is a cellular system in which only one spreading code is allocated to each cell in the system for the preamble of the random access channel and whereby said generating means generates all random access bursts using the spreading code of the respective cell as the spreading code for the preamble parts. All preamble parts of the random access bursts transmitted in a particular cell therefore have the same allocated spreading code, but different signature codes.

Alternatively, the generating means generates random access bursts to be transmitted simultaneously so that the preamble parts thereof differ in their spreading codes. This is particularly advantageous in the case that the telecommunication system is a cellular system in which at least two spreading codes are allocated to each cell in the system, whereby the generating means generates random access bursts to be transmitted simultaneously using the at least two spreading codes of the respective cell as the spreading codes for the respective preamble parts. In this case, the signatures codes of the preamble parts of simultaneously transmitted random access bursts can be either identical or different from each other.

Advantageously, the signature code providing means randomly chooses the signature code of a preamble from a plurality of predetermined signature codes. Hereby, the plurality of predetermined signature codes can for example be stored in the apparatus according to the present invention or can be received from the apparatus according to the present invention from another communication device of the telecommunication system. Advantageously, the apparatus according to the present invention is a mobile station of the telecommunication system, whereby the mobile station can receive information on the plurality of signature codes to be chosen for the preamble parts from a selected base station.

The present invention is explained in more detail in the following description by means of a preferred embodiment relating to the enclosed drawings, in which
Figure 1 shows the general structure of a known random access burst,
Figure 2 shows a block diagram of an apparatus according to the present invention,
Figure 3 shows a first example of two simultaneously transmit random access bursts by the apparatus shown in Figure 2, and
Figure 4 shows a second example of two simultaneously transmit random access bursts by the apparatus shown in Figure 2.

Figure 2 shows a block diagram of an apparatus for transmitting and receiving signals in a code division multiple access telecommunication system according to the present invention. The shown apparatus 1 is for example a mobile station of the planned direct sequence WCDMA system mentioned in the introduction. The apparatus 1 transmits random access bursts within a random access channel of the telecommunication system to request services or the like.

The apparatus 1 comprises a generating means 2 for generating random access bursts. The general structure of the random access bursts generated in the generating means 2 corresponds essentially to the known structure of random access bursts as shown in Figure 1. Each random access burst comprises a preamble part and a message part as described in relation to Figure 1. The apparatus 1 further comprises a signature code providing means 3 for providing a signature code and supplying the signature code to the generating means 2. The apparatus 1 further comprises a spreading code providing means 4 for providing a spreading code and supplying the spreading code to the generating means 2. Thereby, the signature code providing means 3 can provide more than one signature code to the generating means 2 depending on the application. Similarly, the spreading code providing means 4 can provide more than one spreading code to the generating means 2 depending on the application.

The generating means 2 generates random access bursts by allocating a signature code from the signature code providing means 3 to the preamble of each random access burst. Further, the generating means 2 allocates a spreading code received from the spreading code providing means 4 to a respective preamble part of a random access burst to be generated. The message parts of the random access bursts generated by the generating means 2 have an allocated spreading code as well as an allocated scrambling code. The spreading code of the message part is determined on the basis of the signature code of the corresponding preamble. Similarly, the scrambling code of a message part of a random access burst is determined on the basis of the respective spreading code of the preamble part of the same random access burst. Thereby, the scrambling code and the spreading code of the message part of the random access burst are fixedly related to the spreading code and the signature code of the preamble part of the same random access burst, so that upon providing the spreading code and the signature code for a preamble part, the scrambling code and the spreading code of the message part are automatically defined.

The generating means 2 generates at least two random access bursts simultaneously. The at least two simultaneously generates random access bursts from the generating means 2 are supplied to a transmitting means 5 of the apparatus 1, which is adapted to transmit the at least two random access bursts simultaneously by means of an antenna 6. The transmitting means 5 comprises for example a high frequency portion, in which the random access bursts generated in the generating means 2 are modulated upon a carrier frequency or the like.

It is to be noted, that Figure 2 only shows elements of the apparatus 1 which are related to the present invention. Other elements which are important for the operation of an apparatus 1 for transmitting and receiving signals in a telecommunication system, for example microphone, loudspeaker, battery pack, (de) modulators, (de) interleavers, memories or the like are not shown but of course comprised in the apparatus.

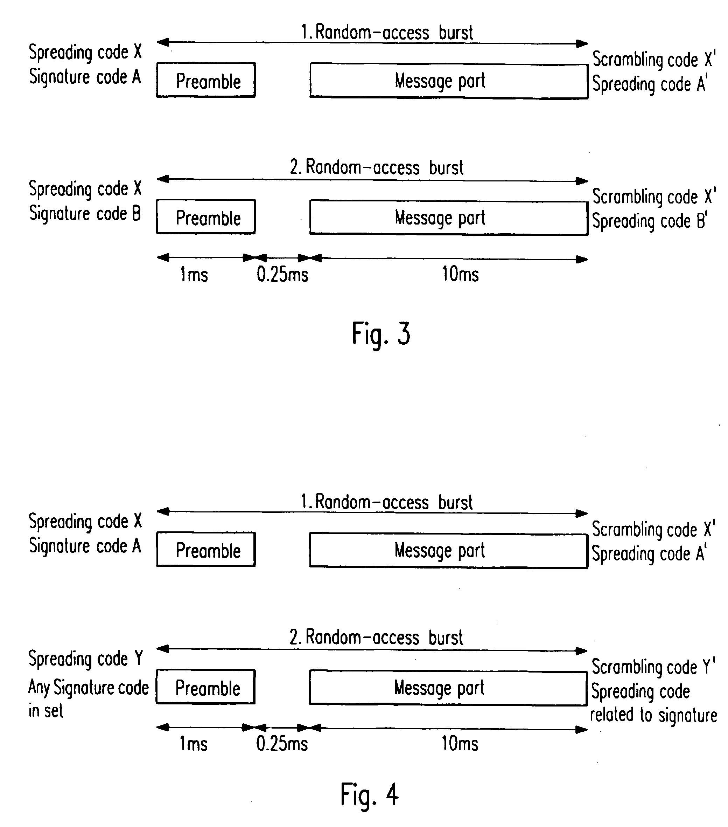

Figures 3 and 4 show a first and a second example, respectively, of two random access bursts generated in the generating means 2 and simultaneously transmit by the transmitting means 5 of the apparatus 1 of Figure 2.

In the first example shown in Figure 3, the generating means 2 generates at least two random access bursts, whereby the random access bursts differ in the signature codes A, B of their preamble parts. Hereby, at least two signature codes are provided by the signature code providing means 3 and supplied to the generating means 2. The different signature codes are for example randomly chosen from a set of different signature codes (i. e. 16) which are for example stored in a memory means of the signature code providing means 3.

As shown in Figure 3, the first random access burst has a preamble with an allocated signature code A and the second random access burst has a preamble part with an allocated signature code B different from the signature code A. Since the spreading code of the respecitve message part is determined on the basis of the signature code of the preamble part, the message part of the first random access burst has an allocated spreading code A' determined on the basis of the signature code A of the preamble part and the message part of the second random access burst has a spreading code B' determined on the basis of the signature code B of the preamble part.

In the example shown in Figure 3, the preamble parts of the first and the second random access burst have the same spreading code X. This corresponds to a case, in which only one preamble spreading code is allocated to one cell of the telecommunication system. If the apparatus 1 shown in Figure 2 is for example a mobile station, the respective spreading code of each cell is transmitted by a base station and stored in the spreading code providing means 4, which supplies the received spreading code to the generating means 2. Correspondingly, the message parts of the first and the second random access bursts have an allocated scrambling code X', which is determined on the basis of the spreading code X of the preamble parts. Thus, the spreading codes of the message parts of the first and second random access bursts are different from each other and the scrambling codes of the message parts of the first and second random access burst are identical.

In the second example shown in Figure 4, the at least two random access bursts generated in the generating means 2 and transmitted simultaneously by a transmission means 5 have different spreading codes X and Y, respectively, allocated to their preamble parts. The first random access burst has a preamble part with a spreading code X and the second random access burst has a preamble part with a spreading code Y different from the spreading code X. This corresponds to the case, in which more than one spreading code is provided for the preamble of the random access channel in each cell of the telecommunication system. In this case, a base station of the corresponding cell transmits the at least two spreading codes to the respective mobile stations, as for example the apparatus 1 of Figure 2. The apparatus 1 then stores the received spreading codes in the spreading code providing means 4. The generating means 2 then uses the spreading codes from the spreading code providing means 4 to generate the at least two random access bursts. In the example shown in Figure 4, the message part of the first random access burst has a scrambling code X' determined on the basis of the spreading code X of the preamble part. Correspondingly, the message part of the second random access burst has a scrambling code Y' determined on the basis of the spreading code Y. The preamble part of the first random access burst further has a signature code A, so that the message part of the first random access burst has a spreading code A' determined on the basis of the signature code A of the preamble part. The signature code for the preamble part of the second random access burst can either be the same signature code as for the preamble code of the first random access burst, namely the signature code A, or another signature code different from the signature code A. If the preamble part of the second random access burst also has the signature code A, the first and second random access bursts of the example shown in Figure 4 are only distinguished by their different spreading codes X and Y, respectively of their preamble parts.

As stated above, the at least two random access bursts generated in the generating means 2 of the apparatus 1 according to the present invention have essentially the same structure as the known random access bursts, an example of which is shown in Figure 1. Thus, the random access bursts generated by the generating means 2 of the apparatus 1 advantageously comprise a preamble part having a length of 1ms and a message part having a length of 10ms. The interval between the transmission of a preamble part and the message part is 0,25ms. The signature codes for the preamble parts of the random access bursts are chosen from a set of different signature codes (i. e. 16). Further, the preamble parts of the random access bursts are spread by a spreading code of the length 256. The length of the spreading code for the message parts of the random access bursts is 256 for the Q channel (control channel) and between 32 and 256 for the I channel (data channel).

The simultaneous transmission of at least two random access bursts by the transmission means 5 of the apparatus 1 enables the transmission of a much higher amount of data (a higher bit rate) within the time duration of one random access burst as compared to the state of the art. Thus, the present invention enables the transmission of a higher data rate within the random access bursts without increasing the time duration of the message part. The apparatus of the present invention has to be equipped for multicode transmissions.

Particularly in cases, in which the at least two simultaneously transmitted random access bursts contain data which belong together or are to be linked together in a receiving apparatus, the message parts of the simultaneously transmit random access bursts have to comprise respective link information. This link information, for example, comprises information on the total number of simultaneously transmit random access bursts, information on the transmitting apparatus, information on how the data of the different message parts have to be linked together in receiving apparatus and so on.

## Claims

1. Apparatus (1) for transmitting and receiving signals in a code division multiple access telecommunication system, in which a random access channel for the transmission of random access bursts is provided,
whereby a random access burst comprises a preamble part and a message part, with
generating means (2) for generating random access bursts, whereby the preamble part of a random access burst has a first and a second allocated code and the message part of the same random access burst has a first and a second allocated code, whereby the message part codes are determined on the basis of the preamble codes, and
transmitting means (5) for transmitting generated random access bursts,
**characterized in,**
that said means (5) for transmitting random access bursts are adapted to transmit at least two random access bursts simultaneously, whereby random access bursts to be transmitted simultaneously are generated by said generating means (2) so that the preamble parts thereof differ in at least one code.

2. Apparatus (1) for transmitting and receiving signals in a code division multiple access telecommunication system according to claim 1,
**characterized in,**
that said first code allocated to a preamble part of a random access burst is a signature code comprised in said preamble part and said second code allocated to a preamble part is a spreading code.

3. Apparatus (1) for transmitting and receiving signals in a code division multiple access telecommunication system according to claim 2,
**characterized in,**
that said first code allocated to a message part of a random access burst is a spreading code determined on the basis of the signature code of the preamble part and the second code of the message part is a scrambling code determined on the basis of the spreading code of the preamble part.

4. Apparatus (1) for transmitting and receiving signals in a code division multiple access telecommunication system according to claim 2 or 3,
**characterized in,**
that said generating means (2) generates random access bursts to be transmitted simultaneously so that the preamble parts thereof differ in the signature codes.

5. Apparatus (1) for transmitting and receiving signals in a code division multiple access telecommunication system according to claim 4,
**characterized in,**
that said telecommunication system is a cellular system in which only one spreading code is allocated for the preamble of the random access channel in each cell in the system, whereby said generating means (2) generates all random access bursts using the common spreading code of the respective cell as said spreading code for the preamble parts.

6. Apparatus (1) for transmitting and receiving signals in a code division multiple access telecommunication system according to claim 2 or 3,
**characterized in,**
that said generating means (2) generates random access bursts to be transmitted simultaneously so that the preamble parts thereof differ in the spreading codes.

7. Apparatus (1) for transmitting and receiving signals in a code division multiple access telecommunication system according to claim 6,
**characterized in,**
that said telecommunication system is a cellular system in which at least two spreading codes are allocated to each cell in the system, whereby said generating means (2) generates random access bursts to be transmitted simultaneously using the at least two spreading codes of the respective cell as said spreading codes for the respective preamble parts.

8. Apparatus (1) for transmitting and receiving signals in a code division multiple access telecommunication system according to one of the claim 2 to 7,
**characterized in,**
that said generating means (2) randomly chooses the signature code of a preamble from a plurality of predetermined signature codes.

9. Method for transmitting random access bursts in a code division multiple access telecommunication system, in which a random access channel for the transmission of random access bursts is provided,
whereby a random access burst comprises a preamble part and a message part,
comprising the steps of
generating random access bursts, whereby the preamble part of a random access burst has a first and a second allocated code and the message part of the same random access burst has a first and a second allocated code, whereby the message part codes are determined on the basis of the preamble codes, and
transmitting generated random access bursts,
**characterized in,**
that at least two random access bursts are transmitted simultaneously, whereby the preamble parts thereof differ in at least one code.

10. Method for transmitting random access bursts in a code division multiple access telecommunication system according to claim 9,
**characterized in,**
that said first code allocated to a preamble part of a random access burst is a signature code comprised in said preamble part and said second code allocated to a preamble part is a spreading code.

11. Method for transmitting random access bursts in a code division multiple access telecommunication system according to claim 10,
**characterized in,**
that said first code allocated to a message part of a random access burst is a spreading code determined on the basis of the signature code of the preamble part and the second code of the message part is a scrambling code determined on the basis of the spreading code of the preamble part.

12. Method for transmitting random access bursts in a code division multiple access telecommunication system according to claim 10 or 11,
**characterized in,**
that preamble parts of random access bursts to be transmitted simultaneously differ in the signature codes.

13. Method for transmitting random access bursts in a code division multiple access telecommunication system according to claim 12,
**characterized in,**
that said telecommunication system is a cellular system in which only one spreading code is allocated for the preamble of the random access channel in each cell in the system, whereby in all random access bursts the common spreading code of the respective cell is used as said spreading code for the preamble parts.

14. Method for transmitting random access bursts in a code division multiple access telecommunication system according to claim 10 or 11,
**characterized in,**
that the preamble parts of random access bursts to be transmitted simultaneously differ in the spreading codes.

15. Method for transmitting random access bursts in a code division multiple access telecommunication system according to claim 14,
**characterized in,**
that said telecommunication system is a cellular system in which at least two spreading codes are allocated to each cell in the system, whereby in random access bursts to be transmitted simultaneously said at least two spreading codes of the respective cell are used as said spreading codes for the respective preamble parts.

16. Method for transmitting random access bursts in a code division multiple access telecommunication system according to one of the claim 10 to 15,
**characterized in,**
that the signature code of a preamble is randomly chosen from a plurality of predetermined signature codes.
